# FASCICULE DE BREVET EUROPEEN

(11) **EP 0 989 960 B1**
(45) Date de publication et mention de la délivrance du brevet: **10.04.2002**
(21) Numéro de dépôt: 98922861.4
(22) Date de dépôt: 24.04.1998
(51) Int. Cl.: C02F 1/78

(54) **INSTALLATION DE PRODUCTION D'EAU OZONEE**
ANLAGE ZUR ERZEUGUNG VON OZONIERTEM WASSER
INSTALLATION FOR PRODUCING OZONIZED WATER

(30) Priorité: 17.06.1997 FR 9707506
(43) Date de publication de la demande: 05.04.2000
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: PEAN, Jean-Louis, F-91310 Montlhéry (FR); GAMMAL, Boris, F-92190 Meudon (FR)
(74) Mandataire: Mellul-Bendelac, Sylvie Lisette
(86) Numéro de dépôt international: FR9800823
(87) Numéro de publication internationale: WO9857896

(56) Documents cités:
- EP-A- 0 577 475
- FR-A- 2 577 209
- US-A- 5 174 905
- PATENT ABSTRACTS OF JAPAN vol. 015, no. 496 (C-0894), 16 décembre 1991 & JP 03 217294 A (MITSUBISHI HEAVY IND LTD), 25 septembre 1991

## Description

La présente invention concerne une installation de production d'eau ozonée du type comportant un circuit de production d'eau ozonée comportant une entrée d'eau, une entrée d'injection d'ozone pour l'injection d'ozone issu d'une source d'ozone, un contacteur pour la mise en contact de l'ozone avec l'eau et un tronçon d'exploitation de l'eau ozonée disposé en aval du contacteur.

De telles installations sont utilisées notamment afin de produire de l'eau ozonée pour le lavage de poissons ou des crustacés.

Dans les installations connues, les contacteurs comportent un récipient empli d'eau dans lequel on effectue un barbotage de l'ozone afin de diluer une partie de l'ozone gazeux dans l'eau.

Toutefois, seule une faible proportion de l'ozone traversant l'eau est effectivement dissoute, de sorte qu'une part importante de l'ozone traverse le volume d'eau puis s'échappe par une ouverture ménagée dans la partie supérieure du récipient. L'ozone résiduel est ainsi évacué par libération dans l'atmosphère.

Afin de supprimer les nuisances dues à de telles libérations d'ozone, un filtre, comportant des agents oxydants est fréquemment prévu à la sortie d'évacuation de l'ozone afin de transformer celui-ci en oxygène avant sa libération.

Du fait de la quantité importante d'ozone libéré dans l'atmosphère et de la nécessité fréquente de traiter celui-ci, de telles installations ont un coût de mise en oeuvre élevé.

L'invention a pour but de proposer une installation de production d'eau ozonée dont le coût d'exploitation est réduit et qui minimise les pertes d'ozone dans l'atmosphère.

A cet effet, l'invention a pour objet une installation de production d'eau ozonée du type précité, caractérisé en ce qu'elle comporte des moyens de recueil de l'ozone non dissous, disposés en aval du contacteur, et en ce que la sortie desdits moyens de recueil est reliée audit circuit de production d'eau ozonée en amont du contacteur.

Suivant des modes particuliers de réalisation, l'installation peut comporter l'une ou plusieurs des caractéristiques suivantes :
- elle comporte des moyens de réunion de la sortie des moyens de recueil et de la sortie de la source d'ozone, en amont de l'entrée d'injection d'ozone prévue sur le circuit de production d'eau ozonée ;
- ladite entrée d'injection d'ozone comporte une trompe à eau pour l'injection de l'ozone gazeux dans l'eau circulant dans le circuit de production d'eau ozonée ;
- elle comporte un régulateur de débit massique, en sortie de la source d'ozone ;
- lesdits moyens de recueil comportent un pot décanteur ;
- elle comporte, en aval des moyens de recueil de l'ozone non dissous, un évent calibré assurant l'évacuation d'une quantité déterminée du gaz recueilli ;
- ledit contacteur comporte un serpentin ;
- le circuit de production de l'eau ozonée est refermé en boucle, et le tronçon d'exploitation de l'eau ozonée comporte une sortie de circulation de l'eau ozonée, laquelle sortie est reliée à ladite entrée d'eau du circuit de production d'eau ozonée ;
- ladite boucle de circulation de l'eau ozonée comporte une pompe de mise en circulation ;
- ledit tronçon d'exploitation de l'eau ozonée comporte une prise de prélèvement d'eau ozonée ; et
- ledit tronçon d'exploitation de l'eau ozonée comporte une machine de production de glace ozonée comportant un bac à eau pour la fabrication de la glace et ledit bac est monté en série dans ladite boucle de circulation de l'eau ozonée.

L'invention sera mieux comprise à la lecture de la description qui va suivre, donnée uniquement à titre d'exemple et faite en se référant à l'unique figure qui est une vue schématique d'une installation de production d'eau ozonée selon l'invention.

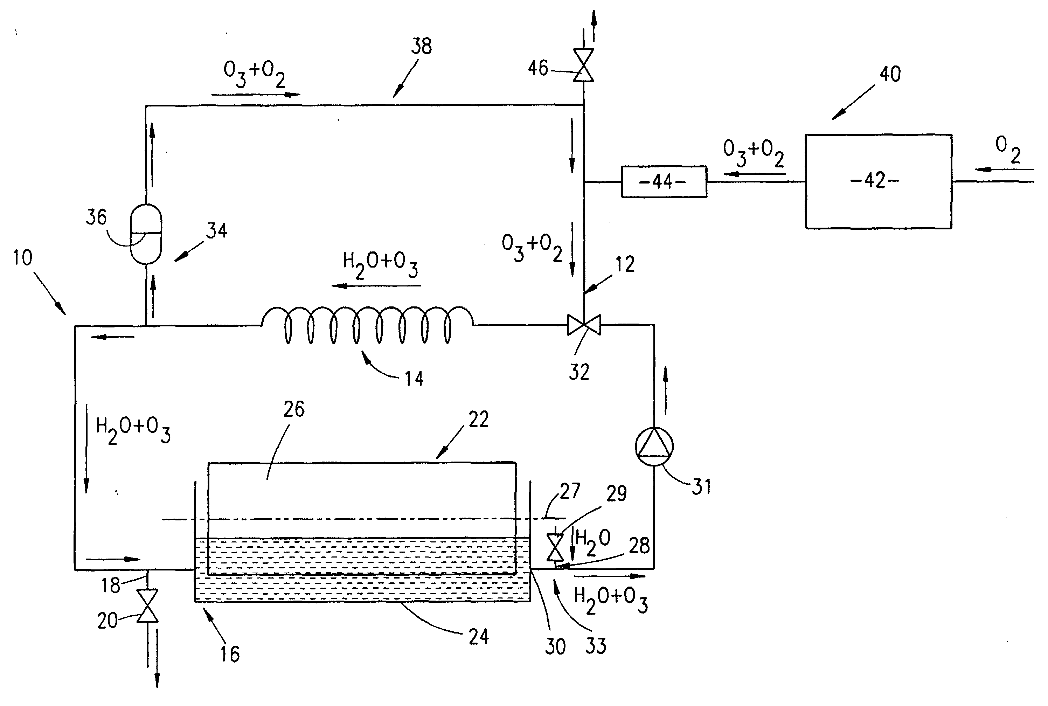

L'installation de production d'eau ozonée représentée sur la figure 1 comporte principalement un circuit 10 de production d'eau ozonée. Ce circuit comporte une entrée 12 d'injection d'ozone, un contacteur 14 pour la mise en contact de l'ozone avec l'eau circulant dans le circuit de production, et un tronçon 16 d'exploitation de l'eau ozonée.

Le tronçon d'exploitation 16 comporte une prise de prélèvement d'eau ozonée 18 formée par un piquage muni d'une vanne 20. Il comporte en outre, montée en série, une machine de production de glace ozonée 22. Celle-ci comporte un bac à eau ozonée 24 monté en série sur le circuit 10 de production d'eau ozonée. Elle comporte en outre, de manière connue en soi, un cylindre frigorifique rotatif 26 disposé horizontalement mobile autour de son axe horizontal 27. La partie inférieure du cylindre rotatif 26 baigne dans l'eau ozonée contenue dans le bac 24. Le niveau de l'eau dans le bac 24 est maintenu constant par apport d'eau depuis une entrée d'eau extérieure, notée 28. Celle-ci est munie d'une vanne 29 dont l'ouverture est commandée par un flotteur porté à la surface de l'eau dans le bac 24.

Le bac 24 comporte une sortie 30 de circulation de l'eau ozonée non transformée en glace. Cette sortie 30 est reliée par l'intermédiaire d'une pompe 31 à une trompe à eau 32 à laquelle est intégrée l'entrée 12 d'injection d'ozone.

Ainsi, le circuit 10 de production d'eau ozonée est refermé en boucle. Il forme une boucle notée 33 qui comporte successivement le contacteur 14, la prise de prélèvement 20, la machine de production de glace 22, la pompe 31 et la trompe à eau 32 intégrant l'entrée d'injection d'ozone 12. L'entrée d'eau dans le circuit 10 de production d'eau ozonée est formée par l'entrée 28 située immédiatement en aval du bac 24.

Le contacteur 14 formant des moyens de mise en contact de l'ozone avec l'eau circulant dans le circuit de production d'eau ozonée est formé par exemple par un serpentin.

La trompe à eau 32, ou dispositif à Venturi, forme un hydro-éjecteur apte à introduire dans le flux liquide circulant dans le circuit 10 des bulles de diamètre calibré d'ozone issu de l'entrée d'injection d'ozone 12.

Selon l'invention, en aval du serpentin 14, sont prévus des moyens 34 de recueil de l'ozone non dissous dans le serpentin. Ces moyens sont par exemple formés par un pot décanteur 36 adapté pour séparer le gaz non dissous et notamment l'ozone non dissous de l'eau ozonée circulant dans le circuit de production 10.

La sortie d'évacuation de l'ozone résiduel (ozone non dissous) est reliée à l'entrée d'injection d'ozone 12.

Ainsi, le pot décanteur 36 est intégré dans une boucle de recyclage désignée par la référence générale 38 et comportant un tronçon commun avec la boucle 33 de circulation de l'eau ozonée. Ce tronçon commun est constitué par la trompe à eau 32 et le serpentin 14.

En outre, une source 40 d'alimentation en ozone est reliée au circuit de recyclage 38 en amont de l'entrée d'injection d'ozone 12.

Cette source d'alimentation en ozone comporte un ozoneur 42 alimenté par de l'oxygène impur formé par exemple par liquéfaction de l'air. Le gaz produit en sortie de l'ozoneur comporte environ 10 % d'ozone et 90 % d'oxygène. En sortie de l'ozoneur est installé un régulateur de débit massique 44.

La boucle de recyclage 38 comporte un évent calibré 46 ménagé en amont des moyens d'alimentation 40 en ozone. Cet orifice est adapté pour évacuer une quantité déterminée du gaz circulant dans la boucle de recyclage 38. Il est destiné en particulier à évacuer l'azote et l'argon provenant des impuretés contenues dans l'oxygène alimentant l'ozoneur 42.

L'installation décrite ici fonctionne de la manière suivante. L'eau contenue dans le bac 24 de la machine de production de glace ozonée circule en continu dans la boucle 33 de production d'eau ozonée sous l'action de la pompe 31. L'ozone provenant de l'entrée d'injection d'ozone 12 est mis en contact avec l'eau ozonée circulant dans la boucle principale 33. Une fraction de l'ozone gazeux se dissous dans l'eau circulant dans le circuit 10 lors de la circulation de l'ozone et de l'eau suivant la longueur du serpentin 14. L'ozone résiduel non dissous est récupéré par le pot décanteur 36 en sortie du serpentin 14 et renvoyé vers la trompe à eau 32. Dans la pratique, environ 80 % de l'ozone introduit en amont du serpentin 14 est ainsi recyclé.

Lors de la circulation de l'ozone résiduel dans la boucle de recyclage 38, une fraction du gaz circulant est évacuée dans l'atmosphère au travers de l'évent calibré 36 afin de limiter la concentration en azote et en argon dans le gaz circulant dans cette boucle.

En outre, les moyens d'alimentation en ozone 40 injectent dans la boucle de recyclage 38, une quantité d'ozone correspondant sensiblement à la quantité d'ozone dissous dans l'eau et à la quantité de gaz s'échappant par l'évent 36.

On conçoit ainsi que lors de sa circulation dans la boucle principale 33, l'eau se charge progressivement en ozone dissous. En particulier, le débit dans le circuit 10 est fixé de sorte que le débit circulant est compris entre trois et dix-huit fois le débit d'eau ozonée consommée dans le tronçon d'exploitation formé par la prise de prélèvement 20 dans la machine de production de glace 22.

Le niveau d'eau dans le bac 24 est maintenu constant grâce à la vanne 28 commandée par le flotteur de détection du niveau de liquide dans le bac.

En variante non représentée, la machine de production de glace 24 peut comporter un capot de couverture évitant toute évaporation d'ozone gazeux.

En l'absence de tels capots hermétigues, une hotte d'évacuation de l'ozone vaporisée est prévue au-dessus de la machine 22.

Par ailleurs, il est possible de recycler le gaz s'échappant par l'évent calibré 46 vers l'entrée de l'ozoneur 42. A cet effet, on procède à un séchage de ce gaz, afin de réduire la quantité d'eau contenue dans celui-ci avant son introduction dans l'ozoneur.

On conçoit qu'avec une telle installation, les pertes en ozone sont très réduites. Ainsi, la quantité d'ozone nécessaire pour la production d'une quantité de glace déterminée est relativement faible comparée à l'ozone utilisé dans une installation ne comportant pas de tels moyens de recyclage de l'ozone.

La machine de production de glace mise en oeuvre dans l'installation décrite est une machine à axe horizontal. Toutefois, une machine à axe vertical peut également être utilisée. Dans ce cas, l'eau ozonée circulant dans le circuit s'écoule de haut en bas le long des parois cylindriques d'un cylindre réfrigéré tournant autour de son axe vertical. Un racloir assure le prélèvement de la glace le long du cylindre.

## Revendications

1. Installation de production d'eau ozonée du type comportant un circuit (10) de production d'eau ozonée comportant une entrée d'eau (28), une entrée d'injection d'ozone (12) pour l'injection d'ozone issu d'une source d'ozone (40), un contacteur (14) pour la mise en contact de l'ozone avec l'eau et un tronçon (16) d'exploitation de l'eau ozonée disposé en aval du contacteur (14), **caractérisée en ce qu'**elle comporte des moyens (34) de recueil de l'ozone non dissous, disposés en aval du contacteur (14), et **en ce que** la sortie desdits moyens de recueil (34) est reliée audit circuit (10) de production d'eau ozonée en amont du contacteur (14).

2. Installation selon la revendication 1, **caractérisée en ce qu'**elle comporte des moyens de réunion de la sortie des moyens de recueil (34) et de la sortie de la source d'ozone (40), en amont de l'entrée (12) d'injection d'ozone prévue sur le circuit de production d'eau ozonée (10).

3. Installation selon la revendication 1 ou 2, **caractérisée en ce que** ladite entrée d'injection d'ozone (12) comporte une trompe à eau (32) pour l'injection de l'ozone gazeux dans l'eau circulant dans le circuit de production d'eau ozonée.

4. Installation selon l'une quelconque des revendications précédentes, **caractérisée en ce qu'**elle comporte un régulateur de débit massique (44), en sortie de la source d'ozone (40).

5. Installation selon l'une quelconque des revendications précédentes, **caractérisée en ce que** lesdits moyens de recueil (34) comportent un pot décanteur (36).

6. Installation selon l'une quelconque des revendications précédentes, **caractérisée en ce qu'**elle comporte, en aval des moyens de recueil de l'ozone non dissous (34), un évent calibré (46) assurant l'évacuation d'une quantité déterminée du gaz recueilli.

7. Installation selon l'une quelconque des revendications précédentes, **caractérisée en ce que** ledit contacteur comporte un serpentin (14).

8. Installation selon l'une quelconque des revendications précédentes, **caractérisée en ce que** le circuit de production de l'eau ozonée (10) est refermé en boucle (33), et **en ce que** le tronçon (16) d'exploitation de l'eau ozonée comporte une sortie de circulation (30) de l'eau ozonée, laquelle sortie est reliée à ladite entrée (28) d'eau du circuit de production d'eau ozonée.

9. Installation selon la revendication 8, **caractérisée en ce que** ladite boucle (33) de circulation de l'eau ozonée comporte une pompe (31) de mise en circulation.

10. Installation selon la revendication 8 ou 9, **caractérisée en ce que** ledit tronçon (16) d'exploitation de l'eau ozonée comporte une prise (20) de prélèvement d'eau ozonée.

11. Installation selon l'une quelconque des revendications 8 à 10, **caractérisée en ce que** ledit tronçon (16) d'exploitation de l'eau ozonée comporte une machine (22) de production de glace ozonée comportant un bac (24) à eau pour la fabrication de la glace et **en ce que** ledit bac (24) est monté en série dans ladite boucle de circulation de l'eau ozonée.

## Patentansprüche

1. Anlage zur Erzeugung von ozonisiertem Wasser des Typs, der einen Kreislauf (10) zur Erzeugung von ozonisiertem Wasser umfasst, und dieser wiederum umfasst einen Wassereinlass (28), einen Einlass (12) zum Einblasen von Ozon, um Ozon, das aus einer Ozonquelle (40) stammt, einzublasen, einen Kontaktor (14), um das Ozon mit Wasser in Verbindung zu bringen, und ein Teilstück (16) zur Verwendung des stromabwärts von dem Kontaktor (14) befindlichen ozonisierten Wassers,
**dadurch gekennzeichnet, dass** sie Mittel (34) zum Abscheiden des nicht gelösten Ozons, das sich stromabwärts von dem Kontaktor (14) befindet, umfasst und der Auslass der Mittel (34) zum Abscheiden an dem Kreislauf (10) zur Erzeugung von ozonisiertem Wasser stromaufwärts von dem Kontaktor (14) angeschlossen ist.

2. Anlage gemäß Anspruch 1, **dadurch gekennzeichnet, dass** sie Mittel umfasst, um den Auslass der Mittel zum Abscheiden (34) und den Auslass der Ozonquelle (40) stromaufwärts von dem Einlass (12) zum Einblasen des Ozons, der für den Kreislauf (10) zur Erzeugung von ozonisiertem Wasser vorgesehen ist, zu verbinden.

3. Anlage gemäß Anspruch 1 oder 2, **dadurch gekennzeichnet, dass** der Einlass (12) zum Einblasen von Ozon eine Wasserstrahlpumpe (32) umfasst, um gasförmiges Ozon in das Wasser, das in dem Kreislauf zur Erzeugung von ozonisiertem Wasser zirkuliert, einzublasen.

4. Anlage gemäß einem der vorherigen Ansprüche, **dadurch gekennzeichnet, dass** sie am Auslass der Ozonquelle (40) einen Massenstromregler (44) umfasst.

5. Anlage gemäß einem der vorherigen Ansprüche, **dadurch gekennzeichnet, dass** die Mittel (34) zum Abscheiden eine Dekantierflasche (36) umfassen.

6. Anlage gemäß einem der vorherigen Ansprüche, **dadurch gekennzeichnet, dass** sie stromabwärts von den Mitteln (34) zum Abscheiden des nicht gelösten Ozons eine kalibrierte Lüftungsöffnung (46) umfasst, welche den Ablass einer festgelegten Menge des abgeschiedenen Gases sicherstellt.

7. Anlage gemäß einem der vorherigen Ansprüche, **dadurch gekennzeichnet, dass** der Kontaktor eine Rohrschlange (14) umfasst.

8. Anlage gemäß einem der vorherigen Ansprüche, **dadurch gekennzeichnet, dass** der Kreislauf (10) zur Erzeugung von ozonisiertem Wasser mittels einer Schleifenleitung (33) wieder geschlossen wird und das Teilstück (16) zur Verwendung des ozonisierten Wassers einen Auslass (30) zur Zirkulation des ozonisierten Wassers umfasst, wobei dieser Auslass mit dem Einlass (28) des Kreislaufs zur Erzeugung von ozonisiertem Wasser verbunden ist.

9. Anlage gemäß Anspruch 8, **dadurch gekennzeichnet, dass** die Schleifenleitung (33) zur Zirkulation des ozonisierten Wassers eine Umlaufpumpe (31) umfasst.

10. Anlage gemäß Anspruch 8 oder 9, **dadurch gekennzeichnet, dass** das Teilstück (16) zur Verwendung des ozonisierten Wassers einen Hahn (20) zur Entnahme von ozonisiertem Wasser umfasst.

11. Anlage gemäß einem der Ansprüche 8 bis 10, **dadurch gekennzeichnet, dass** das Teilstück (16) zur Verwendung des ozonisierten Wassers eine Maschine (22) zur Erzeugung von ozonisiertem Eis umfasst, die wiederum einen Wasserbehälter (24) für die Herstellung des Eises umfasst, und **dadurch gekennzeichnet, dass** der Behälter (24) in der Schleifenleitung zur Zirkulation des ozonisierten Wassers in Reihe installiert ist.

## Claims

1. Ozonated-water production plant of the type comprising an ozonated-water production circuit (10) having a water inlet (28), an ozone injection inlet (12) for injecting ozone coming from an ozone source (40), a contactor (14) for bringing the ozone into contact with the water and, downstream of the contactor (14), a section (16) for using the ozonated water, **characterized in that** the plant includes means (34) for collecting the undissolved ozone, these means being placed downstream of the contactor (14), and **in that** the outlet of the said collecting means (34) is connected to the said ozonated-water production circuit (10) upstream of the contactor (14).

2. Plant according to Claim 1, **characterized in that** it includes means for joining the outlet of the collecting means (34) to the outlet of the ozone source (40), upstream of the ozone injection inlet (12) provided in the ozonated-water production circuit (10).

3. Plant according to Claim 1 or 2, **characterized in that** the said ozone injection inlet (12) comprises a water nozzle (32) for injecting gaseous ozone into the water flowing in the ozonated-water production circuit.

4. Plant according to any one of the preceding claims, **characterized in that** it includes a mass flow regulator (44) on the outlet side of the ozone source (40).

5. Plant according to any one of the preceding claims, **characterized in that** the said collecting means (34) comprise a scrubber (36).

6. Plant according to any one of the preceding claims, **characterized in that** it includes, downstream of the means (34) for collecting the undissolved ozone, a calibrated vent (46) for discharging a defined amount of the collected gas.

7. Plant according to any one of the preceding claims, **characterized in that** the said contactor comprises a coil (14).

8. Plant according to any one of the preceding claims, **characterized in that** the ozonated-water production circuit (10) is closed in the form of a loop (33) and **in that** the section (16) for using the ozonated water includes an ozonated-water circulation outlet (30), which outlet is connected to the said water inlet (28) of the ozonated-water production circuit.

9. Plant according to Claim 8, **characterized in that** the said ozonated-water circulation loop (33) includes a circulating pump (31).

10. Plant according to Claim 8 or 9, **characterized in that** the said section (16) for using the ozonated water includes an ozonated-water offtake (20).

11. Plant according to any one of Claims 8 to 10, **characterized in that** the said section (16) for using the ozonated water comprises a machine (22) for producing ozonated ice, which includes a water tank (24) for producing the ice, and **in that** the said tank (24) is mounted in series in the said ozonated-water circulation loop.
